## Europäisches Patentamt
## European Patent Office
## Office européen des brevets

(19)

(11) Numéro de publication: **0 036 349**
**B1**

(12) ## FASCICULE DE BREVET EUROPEEN

(45) Date de publication du fascicule du brevet:
**21.09.83**

(51) Int. Cl.³: **B 64 C 25/48**

(21) Numéro de dépôt: **81400322.4**

(22) Date de dépôt: **02.03.81**

(54) Procédé et dispositif pour le freinage d'aéronefs à large voie roulant sur le sol.

(30) Priorité: **11.03.80 FR 8005388**

(43) Date de publication de la demande:
**23.09.81 Bulletin 81/38**

(45) Mention de la délivrance du brevet:
**21.09.83 Bulletin 83/38**

(84) Etats contractants désignés:
**BE DE GB IT NL**

(56) Documents cités:
**DE-A-1 756 129**
**FR-A-673 646**
**FR-A-717 669**
**FR-A-730 775**
**FR-A-735 551**
**FR-A-876 301**

(73) Titulaire: **SOCIETE NATIONALE INDUSTRIELLE AEROSPATIALE Société dite:, 37 Boulevard de Montmorency, F-75781 Paris Cedex 16 (FR)**

(72) Inventeur: **Martin, Henri, 7 rue des Hêtres, F-44600 Saint-Nazaire (FR)**

(74) Mandataire: **Bonnetat, Christian et al, Cabinet PROPI Conseils 23 rue de Léningrad, F-75008 Paris (FR)**

ACTORUM AG

### Procédé et dispositif pour le freinage d'aéronefs à large voie roulant sur le sol

La présente invention concerne un procédé et un dispositif pour le freinage d'aéronefs à large voie roulant sur le sol.

On sait que le train d'atterrissage des aéronefs comporte deux groupes symétriques de roues freinées, dont l'un est disposé à droite et l'autre à gauche de l'axe longitudinal dudit aéronef. Les freins de ces deux groupes de roues sont actionnés par deux pédales différentes disposées côte à côte dans le poste de pilotage: la pédale de droite actionne les freins du groupe de roues droit, tandis que la pédale de gauche actionne les freins du groupe de roues gauche.

Grâce à cette disposition, le pilote de l'aéronef peut, en exerçant des actions différentes sur lesdites pédales, freiner l'un des groupes de roues plus fortement que l'autre, de sorte que l'aéronef pivote autour du premier de ces groupes et que, par de telles actions alternées de freinage plus accentué d'un côté que de l'autre, le pilote peut diriger sur la piste l'avion roulant sur le sol. L'aéronef avance donc en lacet grâce à son freinage dissymétrique.

Cependant, de tels effets de lacet dus à un freinage dissymétrique peuvent devenir trop importants et présenter une amplitude trop grande, en comparaison de la décélération globale à obtenir par freinage, notamment lorsque la voie de l'aéronef, c'est-à-dire la distance séparant les deux groupes de roues droit et gauche, est grande et que l'inertie en lacet est faible.

La présente invention a pour objet de remédier à cet inconvénient et de permettre l'atténuation des effets de lacets dus au freinage dissymétrique d'un aéronef à large voie.

A cette fin, selon l'invention, le procédé pour le freinage d'un aéronef roulant sur le sol et pourvu, d'une part, d'un train d'atterrissage comportant deux atterrisseurs écartés, disposés de part et d'autre de l'axe longitudinal dudit aéronef et pourvus chacun d'au moins une roue et de moyens de freinage, et, d'autre part, de deux organes actionnables par le pilote et respectivement associés à l'actionnement des moyens de freinage desdits atterrisseurs, procédé selon lequel on établit des liaisons croisées entre chacun desdits organes d'actionnement et les moyens de freinage de l'atterrisseur associé à l'autre desdits organes, est remarquable en ce que, lorsqu'on actionne l'un desdits organes, celui-ci entraîne, en plus d'une action de freinage directe sur l'atterrisseur auquel il est associé, une action de freinage croisée, de moindre importance, sur l'atterrisseur associé à l'autre organe, par l'intermédiaire desdites liaisons croisées.

Ainsi, lorsqu'on actionne l'un desdits organes (pédales), on freine non seulement le côté correspondant, mais encore, dans une moindre mesure, le côté opposé. Par suite, on réduit les tendances aux lacets.

On remarquera que, par le document DE-A No 1756129, on connaît déjà un système de commande de freinage d'atterrisseurs comportant chacun des roues jumelées. Ce système est prévu pour que le freinage de chacune des roues jumelées soit différent selon que la roue se trouve du côté de l'extérieur ou de l'intérieur, afin de faciliter les manœuvres de rotation au sol et d'éviter les couples de torsion imposés aux atterrisseurs. Selon ce dispositif antérieur, la roue extérieure de chaque roue jumelée peut être freinée par action directe sur l'organe associé à l'atterrisseur, tandis que la roue intérieure ne peut être freinée que lorsque le pilote actionne l'organe associé à l'autre atterrisseur. Toutefois, l'action sur cet autre atterrisseur déverrouille un système de soupape permettant le freinage de la roue intérieure par l'organe d'actionnement associé à l'atterrisseur correspondant.

Ainsi, non seulement le dispositif décrit dans le document DE-A No 1756129 ne s'applique que dans le cas du freinage d'atterrisseurs à roues jumelées et concerne la solution d'un problème très différent de celui objet de la présente invention, mais encore il ne comporte pas de liaisons croisées de freinage à proprement dit. En effet, les deux roues jumelées d'un atterrisseur sont commandées par le même organe, associé audit atterrisseur, et ce n'est que l'inhibition ou l'activation du freinage de la roue intérieure d'une paire de roues jumelées qui est commandée par l'organe d'actionnement associé à l'atterrisseur opposé.

L'une des différences importantes entre la présente invention et le dispositif du document DE-A No 1756129 réside en ce que, dans le dispositif de l'invention, lorsque l'on appuie sur l'une des pédales sans actionner l'autre, les deux roues subissent un freinage. En revanche, dans le dispositif antérieur, il faut appuyer sur les deux pédales pour que des roues d'atterrisseurs opposées soient freinées.

Par ailleurs, le document FR-A No 735551 concerne un dispositif de freinage différentiel à organe de commande unique, agissant par l'intermédiaire d'un balancier. Un tel dispositif ne présente ni les mêmes fins, ni les mêmes moyens que la présente invention.

Lorsqu'on met en œuvre des liaisons croisées conformément à l'invention, il est avantageux, notamment en roulage de parking, de pouvoir supprimer ces liaisons croisées de freinage, pour augmenter la manœuvrabilité en virage de l'aéronef.

De préférence, les amplitudes absolues et/ou relatives des actions de freinage directes et croisées sont rendues dépendantes de la vitesse de roulage.

Dans un mode de réalisation d'un dispositif selon l'invention, dans lequel les freins sont actionnés par un fluide sous pression sous le contrôle d'électrovannes commandées par les signaux électriques provenant de deux transmetteurs associés respectivement aux organes d'actionnement, la sortie de chaque transmetteur est reliée, d'une part, à l'électrovanne de l'atterrisseur associé et, d'autre part, à l'électrovanne de l'atterrisseur associé à l'autre transmetteur, le gain d'amplification du signal du transmetteur étant

plus grand dans la première liaison que dans la seconde.

Dans une variante de réalisation, dans chaque conduite d'alimentation en fluide des moyens de freinage d'un atterrisseur est interposé un détendeur de pression commandé par un piston et, de préférence, les deux pistons sont commandés par les extrémités d'un levier mobile, en prise dans sa partie centrale avec des éléments d'application d'efforts représentatifs des efforts appliqués par le pilote sur lesdits organes d'actionnement. Ce dispositif peut comporter des transmetteurs associés à des vérins en prise avec le dit levier. Dans ce cas, il est avantageux que les vérins et les pistons des détendeurs soient parallèles entre eux et disposés symétriquement par rapport à un axe orthogonal audit levier.

Les figures du dessin annexé feront bien comprendre comment l'invention peut être réalisée.

La fig. 1 illustre schématiquement un dispositif de freinage selon l'invention.

La fig. 2 illustre schématiquement une variante de réalisation d'un dispositif de freinage selon l'invention.

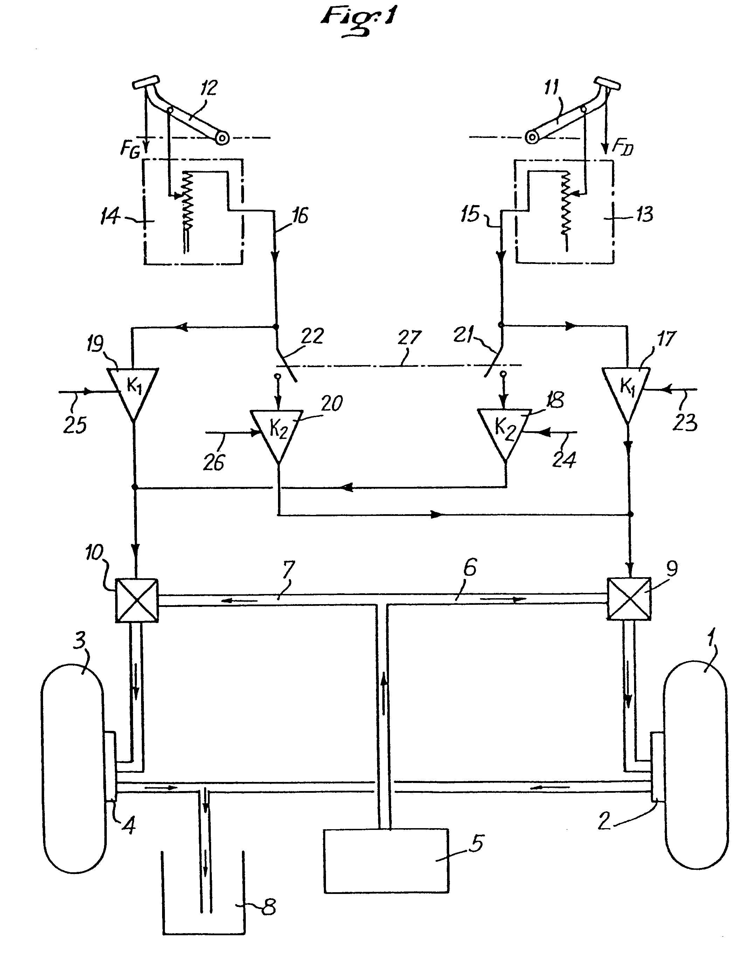

Le dispositif de freinage illustré schématiquement sur la fig. 1 est destiné à freiner les groupes de roues freinés droit et gauche d'un aéronef, lorsqu'il roule sur le sol.

A des fins de simplicité du dessin, le groupe de roues droit est représenté par une seule roue 1, équipée d'un frein 2. De même, le groupe de roues gauche est représenté par une seule roue 3, équipée d'un frein 4.

Les freins 2 et 4 sont alimentés en fluide sous pression, à partir d'une source 5 reliée auxdits freins par des conduites 6 et 7. Par ailleurs, les freins 2 et 4 sont reliés à une bâche hydraulique 8.

Dans chacune des conduites 6 et 7 d'alimentation des freins en fluide sous pression est prévue une électrovanne de commande 9 ou 10.

Dans le poste de pilotage de l'aéronef sont prévues, de façon connue, une pédale droite 11 et une pédale gauche 12. Ces pédales sont reliées chacune à un transmetteur électrique 13 ou 14, transformant l'effort du pilote sur la pédale, c'est-à-dire l'enfoncement de celle-ci, en une grandeur électrique dont la valeur est une fonction dudit effort.

Les sorties 15 et 16 des transmetteurs 13 et 14 sont reliées chacune à deux amplificateurs 17 et 18, d'une part, 19 et 20 d'autre part. Les amplificateurs 17 et 18 sont montés en parallèle en aval de la sortie 15 du transmetteur 13, tandis qu'un interrupteur 21 est prévu entre l'amplificateur 18 et le point commun à celui-ci, à l'amplificateur 17 et à la sortie 15. La sortie de l'amplificateur 17 est reliée à l'entrée de commande de l'électrovanne 9 et celle de l'amplificateur 18 à l'entrée de commande de l'électrovanne 10. Le gain de l'amplificateur 17 est égal à $K_1$ et celui de l'amplificateur 18 à $K_2$, avec $K_1 > K_2$.

De même, les amplificateurs 19 et 20 sont en parallèle en aval de la sortie 16 du transmetteur 14, tandis qu'un interrupteur 22 est prévu entre l'amplificateur 20 et le point commun à celui-ci, à l'amplificateur 19 et à la sortie 16. La sortie de l'amplificateur 19 est reliée à l'entrée de commande de l'électrovanne 10 et celle de l'amplificateur 20 à l'entrée de commande de l'électrovanne 9. Le gain de l'amplificateur 19 est égal à $K_1$ et celui de l'amplificateur 20 à $K_2$.

Ainsi, lorsque le pilote actionne la pédale droite 11 en exerçant un effort $F_D$, si l'interrupteur 21 est fermé, il en résulte un couple de freinage $K_1 F_D$ sur la roue 1 et un couple de freinage $K_2 F_D$ sur la roue 3. De même, si le pilote actionne la pédale gauche 12 en exerçant un effort $F_G$ et si l'interrupteur 22 est fermé, il en résulte un couple de freinage $K_1 F_G$ sur la roue 3 et un couple de freinage $K_2 F_G$ sur la roue. En actionnant simultanément les deux pédales, le couple résultant sur la roue 1 est donc:

$$K_1 F_D + K_2 F_G$$

et sur la roue 3:

$$K_1 F_G + K_2 F_D.$$

Les gains $K_1$ des amplificateurs 17 et 19 et $K_2$ des amplificateurs 18 et 20 peuvent être constants. Cependant, ils peuvent être choisis variables pour tenir compte de la vitesse de l'aéronef. A cet effet, les amplificateurs 17 à 20 comportent des entrées de commande 23 à 26, reliées, par exemple, à la sortie d'une génératrice tachymétrique (non représentée) calée sur l'axe d'une roue non freinée de l'aéronef (par exemple une roue de l'atterrisseur avant).

De plus, à faible vitesse de l'aéronef, par exemple pour les manœuvres de parking, il est intéressant que les amplificateurs 18 et 20 soient hors circuit pour augmenter la manœuvrabilité en lacet de l'aéronef. Cette mise hors circuit peut être réalisée de la manière décrite ci-dessus au moyen d'une génératrice tachymétrique liée à une roue non freinée. Elle peut également être réalisée par la manœuvre des interrupteurs 21 et 22, actionnés en commun par une commande manuelle 27 à la portée du pilote. Bien entendu, la commande 27 permet également de fermer les interrupteurs 21 et 22.

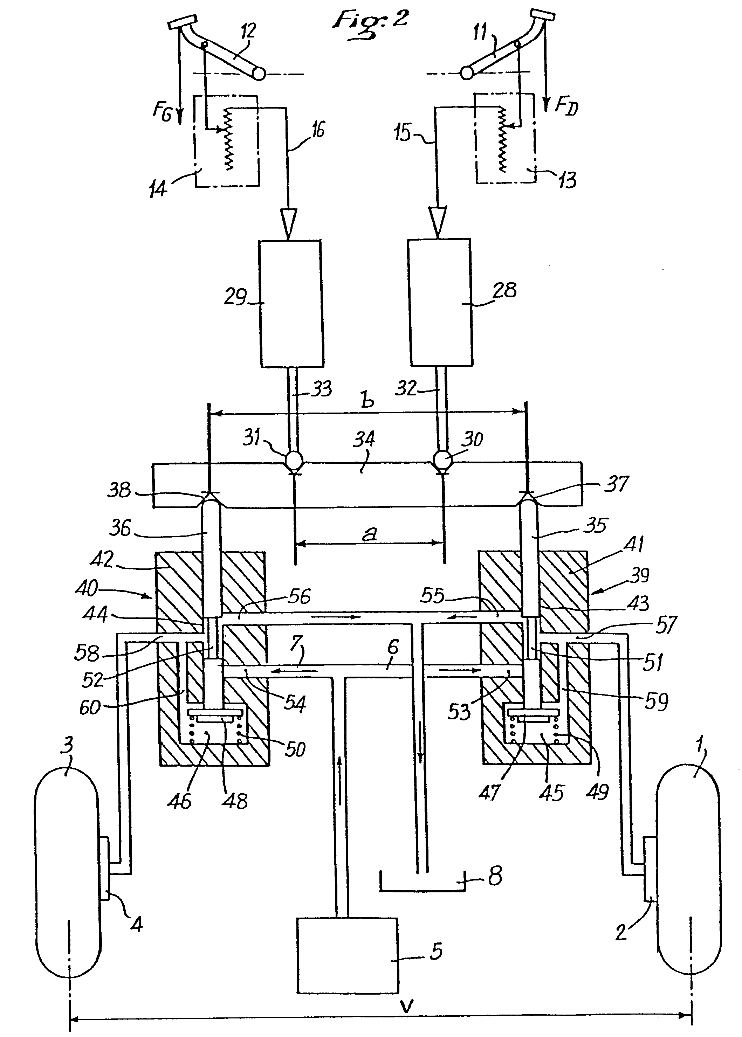

Dans la variante de réalisation préférée de la fig. 2, on retrouve les roues 1 et 3, leurs freins 2 et 4, le circuit hydraulique 5, 6, 7, 8, les pédales 11 et 12, les transmetteurs 13 et 14 et leurs sorties 15 et 16.

Dans le dispositif de la fig. 2, les sorties 15 et 16 des transmetteurs 13 et 14 commandent des vérins 28 et 29, par exemple électriques, dont les cylindres sont fixes. Les extrémités 30 et 31 des tiges 32 et 33 des cylindres 28 et 29 viennent en butée (ou sont articulées) sur un palonnier 34 symétriquement par rapport au centre de celui-ci. Les tiges 32 et 33 des vérins 28 et 29 sont parallèles l'une à l'autre, pour avoir des axes de poussée parallèles; de plus, elles sont relativement proches l'une de l'autre et agissent sur la partie centrale du palonnier 34.

A l'extérieur des extrémités 30 et 31, le palonnier 34 est en appui par ses extrémités (ou articulé) sur des pistons 35 et 36. Les points d'appui 37 et 38 du palonnier 34 sur les pistons 35 et 36 sont symétriques par rapport au centre du palonnier 34, et lesdits pistons sont parallèles l'un à l'autre et aux tiges 32 et 33.

Les pistons 35 et 36 font partie de détendeurs hydrauliques 39 et 40, pourvus de corps 41 et 42, à l'intérieur desquels sont prévus des cylindres 43 et 44 dans lesquels peuvent coulisser à frottement doux lesdits pistons 35 et 36.

Les cylindres 43 et 44 s'élargissent à leur extrémité opposée au palonnier 34 en des chambres 45 et 46, dans lesquelles sont logés des épaulements 47 et 48, solidaires des extrémités correspondantes des pistons 35 et 36. Des ressorts 49 et 50, logés dans les chambres 45 et 46, pressent les pistons 35 et 36 en direction du palonnier 34.

Chaque piston 35 et 36 comporte une partie intermédiaire rétrécie 51 ou 52, faisant office de tiroir entre les entrées de fluides 53 et 54, respectivement reliées à la source 5 par les conduits 6 et 7, les sorties de fluide 55 et 56 en direction de la bâche 8 et les sorties de fluide 57 et 58 en direction des freins 2 et 4 respectivement.

De plus, des communications 59 et 60 sont prévues entre les sorties 57 et 58 et les chambres 45 et 46 respectives.

Lorsque aucune action n'est exercée sur les pistons 35 et 36, ceux-ci sont pressés vers le haut de la fig. 2 sous l'action des ressorts 49 et 50, de sorte que les épaulements 47 et 48 sont en appui sur la paroi supérieure des chambres 45 et 46 dans laquelle débouche le cylindre 43 ou 44 respectif. Dans cette position, les parties inférieures des pistons 35 et 36 obturent les entrées 53 et 54, tandis que la partie rétrécie 51 ou 52 met en communication les sorties 57 et 58, respectivement avec les sorties 55 et 56.

Si l'on enfonce un piston 35 (ou 36), il arrive un moment où la partie supérieure dudit piston obture la sortie 55 (ou 56), alors que la partie rétrécie 51 (ou 52) met en communication l'entrée de fluide 53 (ou 54) avec la sortie 57 (ou 58). Le frein correspondant 2 (ou 4) est donc actionné et la roue 1 (ou 3) freinée. Cependant, grâce à la communication 59 (ou 60), la chambre 45 (ou 46) s'emplit de fluide sous pression qui exerce sur le piston 35 (ou 36) une poussée vers le haut provoquant une réaction qui s'oppose à l'effort de commande du palonnier 34 au point d'appui 37 (ou 38). Ainsi, la pression détendue à la sortie 57 (ou 58) est sensiblement proportionnelle à l'effort transmis par le palonnier 34 au point d'appui 37 (ou 38).

Lorsque le pilote agit sur la pédale 11 (ou 12), son effort $F_D$ (ou $F_G$) est transformé en une grandeur électrique par le transmetteur 13 (ou 14) et la sortie 15 (ou 16) alimente le vérin 28 (ou 29), de façon que l'effort transmis par la tige 32 (ou 33) soit une fonction dudit effort $F_D$ (ou $F_G$). Le palonnier 34 est donc pressé par l'extrémité 30 (ou 31). Il en résulte que les pistons 35 et 36 sont simultanément enfoncés. Cependant, à à cause du rapport des distances entre l'extrémité 30 (ou 31) et les points d'appui 37 et 38, le piston 35 (ou 36) reçoit un effort plus grand que le piston 36 (ou 35).

Chaque pédale 11 (ou 12) actionne donc plus fortement les freins auxquels elle est directement associée que les freins associés directement à l'autre pédale.

Bien entendu, lors du freinage de l'aéronef, le pilote peut actionner simultanément les pédales 11 et 12 et les couples de freinage résultent d'une combinaison des actions décrites précédemment.

Si la distance entre les extrémités 30 et 31 est a et celle entre les points d'appui 37 et 38 b, on a vérifié qu'au niveau de la sensation du pilote et de la réaction de l'aéronef tout se passait comme si la voie V de celui-ci avait été multipliée par le rapport de réduction $\frac{b}{a}$.

**Revendication**

1. Procédé pour le freinage d'un aéronef roulant sur le sol et pourvu, d'une part, d'un train d'atterrissage comportant deux atterrisseurs écartés, disposés de part et d'autre part de l'axe longitudinal dudit aéronef et pourvus chacun d'au moins une roue (1 ou 3) et de moyens de freinage (2 ou 4), et, d'autre part, de deux organes (11 et 12) actionnables par le pilote et respectivement associés à l'actionnement des moyens de freinage (2 et 4) desdits atterrisseurs, procédé selon lequel on établit des liaisons croisées entre chacun desdits organes d'actionnement (11 et 12) et les moyens de freinage (2 et 4) de l'atterrisseur associé à l'autre desdits organes (11 et 12), caractérisé en ce que, lorsque l'on actionne l'un desdits organes (11 ou 12), celui-ci entraîne, en plus d'une action de freinage directe sur l'atterrisseur auquel il est associé, une action de freinage croisée de moindre importance sur l'atterrisseur associé à l'autre organe, par l'intermédiaire desdites liaisons croisées.

2. Procédé selon la revendication 1, caractérisé en ce que les liaisons croisées sont supprimées en cas de roulage à faible vitesse.

3. Procédé selon la revendication 1, caractérisé en ce que les amplitudes absolues et/ou relatives des actions de freinage directes et croisées dépendent de la vitesse de roulage.

4. Dispositif pour la mise en œuvre du procédé spécifié sous la revendication 1, destiné au freinage d'un aéronef roulant sur le sol et pourvu, d'une part, d'un train d'atterrissage comportant deux atterrisseurs écartés, disposés de part et d'autre de l'axe longitudinal dudit aéronef et pourvus chacun d'au moins une roue (1 ou 3) et de moyens de freinage (2, 4), et, d'autre part, de deux organes (11, 12) actionnables par le pilote et respectivement associés à l'actionnement des moyens de freinage (2, 4) desdits atterrisseurs, caractérisé en ce qu'il comporte des liaisons croisées (16, 22, 20 et 15, 21, 18) entre chacun desdits organes d'actionnement (11, 12) et les moyens de freinage (2, 4) de l'atterrisseur associé à l'autre desdits organes, de sorte que, lorsqu'on actionne l'un desdits organes (11, 12), celui-ci entraîne, en plus d'une action de freinage ($K_1$)

directe sur l'atterrisseur auquel il est associé, une action de freinage croisée ($K_2$), de moindre importance, sur l'atterrisseur associé à l'autre organe (11, 12).

5. Dispositif selon la revendication 4, dans lequel les freins (2, 4) sont actionnés par un fluide sous pression, sous le contrôle d'électrovannes (9, 10) commandées par les signaux électriques provenant de deux transmetteurs (13, 14) associés respectivement aux organes d'actionnement (11, 12), caractérisé en ce que la sortie (15, 16) de chaque transmetteur (13, 14) est reliée, d'une part, à l'électrovanne (9, 10) de l'atterrisseur associé et, d'autre part, à l'électrovanne (10, 9) de l'atterrisseur associé à l'autre transmetteur, le gain d'amplification du signal du transmetteur étant plus grand dans la première liaison ($K_1$) que dans la seconde ($K_2$).

6. Dispositif selon la revendication 4, dans lequel les freins (2, 4) sont actionnés par un fluide sous pression, caractérisé en ce que dans chaque conduite d'alimentation en fluide des moyens de freinage (2, 4) d'un atterrisseur est interposé un détendeur (39, 40) commandé par un piston (35, 36) et en ce que les deux pistons (35, 36) sont commandés par les extrémités d'un levier mobile (34), en prise dans sa partie centrale avec des éléments (32, 33) d'application d'efforts représentatifs des efforts appliqués par le pilote sur lesdits organes d'actionnement (11, 12).

7. Dispositif selon la revendication 6, dans lequel sont prévus deux transmetteurs (13, 14) associés respectivement aux organes d'actionnement (11, 12), caractérisé en ce que lesdits transmetteurs (13, 14) commandent des vérins (28, 29) en prise avec la partie centrale dudit levier mobile (34).

8. Dispositif selon la revendication 6, caractérisé en ce que lesdits vérins (28, 29) et lesdits pistons (35, 36) des détendeurs (39, 40) sont parallèles entre eux et disposés symétriquement par rapport au centre dudit levier (34).

9. Dispositif selon la revendication 8, caractérisé en ce que les deux vérins (28, 29) sont disposés d'un côté du levier (34), tandis que les deux détendeurs (39, 40) sont disposés de l'autre côté de celui-ci.

10. Dispositif selon l'une des revendications 6 à 9, caractérisé en ce que chaque détendeur (39, 40) est du type à contre-réaction de pression.

## Patentansprüche

1. Verfahren zum Abbremsen eines auf dem Erdboden rollenden Flugzeuges, das einerseits ein Landegestell aus zwei getrennten, beiderseits der Flugzeuglängsachse angeordneten und jeweils mit zumindest einem Rad (1 oder 3), sowie mit Bremseinrichtungen (2 oder 4) versehenen Fahrwerken und andererseits zwei Organe (11 und 12) aufweist, die vom Piloten betätigt werden können und die den Bremseinrichtungen (2 und 4) jeweils zugeordnet sind, wobei nach diesem Verfahren die Kreuzverbindungen zwischen jedem dieser Betätigungsorgane (11 und 12) und den Bremseinrichtungen (2 und 4) des dem anderen dieser Organe (11 und 12) zugeordneten Fahrwerks hergestellt werden, dadurch gekennzeichnet, dass, wenn eines dieser Organe (11 und 12) betätigt wird, dieses dann zusätzlich zu einer direkten Bremswirkung auf das ihm zugeordnete Fahrwerk eine gekreuzte Bremswirkung geringeren Ausmasses auf das dem anderen Organ zugeordneten Fahrwerks mittels dieser Kreuzverbindungen hervorruft.

2. Verfahren nach Anspruch 1, dadurch gekennzeichnet, dass die Kreuzverbindungen beim Rollen mit geringer Geschwindigkeit unwirksam bleiben.

3. Verfahren nach Anspruch 1, dadurch gekennzeichnet, dass die absoluten und/oder relativen Amplituden der direkten und der gekreuzten Bremswirkungen von der Rollgeschwindigkeit abhängen.

4. Vorrichtung zum Durchführen des Verfahrens nach Anspruch 1 zum Abbremsen eines auf dem Erdboden rollenden Flugzeuges, das einerseits ein Landegestell aus zwei getrennten, beiderseits der Flugzeuglängsachse angeordneten und jeweils mit zumindest einem Rad (1 oder 3), sowie mit Bremseinrichtungen (2 oder 4) versehenen Fahrwerken und andererseits zwei Organe (11 und 12) aufweist, die vom Piloten betätigt werden können und die den Bremseinrichtungen (2 und 4) jeweils zugeordnet sind, gekennzeichnet durch zwischen den Betätigungsorganen (11, 12) und den Bremseinrichtungen (2, 4) des dem anderen der Organe zugeordneten Fahrwerks angeordnete Kreuzverbindungen (16, 22, 20 und 15, 21, 18), die derart ausgelegt sind, dass bei Betätigen eines der Organe (11, 12) dieses zusätzlich zur direkten auf das dem ihm zugeordneten Fahrwerk ausgeübten Bremswirkung ($K_1$) eine gekreuzte Bremswirkung ($K_2$) geringeren Ausmasses auf das dem anderen Organ zugeordnete Fahrwerk hervorruft.

5. Vorrichtung nach Anspruch 4 mit Bremsen (2, 4), die durch ein Druckmittel betätigt werden, das unter der Kontrolle von Magnetventilen (9, 10) steht, die von aus zwei dem jeweiligen Betätigungsorgan (11, 12) zugeordneten Gebern (13, 14) stammenden elektrischen Signalen gesteuert werden, dadurch gekennzeichnet, dass der Ausgang jedes Gebers (13, 14) einerseits an dem Magnetventil (9, 10) des zugeordneten Fahrwerks und andererseits am Magnetventil (10, 9) des dem anderen Geber zugeordneten Fahrwerks liegt, wobei der Verstärkungsgrad des Signals vom Geber in der ersten Verbindung ($K_1$) grösser ist als in der zweiten ($K_2$).

6. Vorrichtung nach Anspruch 4, mit durch ein Druckmittel betätigten Bremsen, dadurch gekennzeichnet, dass in jeder Strömungsmittelspeiseleitung der Bremseinrichtungen (2, 4) eines Fahrwerks ein Druckregler (39, 40) zwischengeschaltet ist, der von einem Kolben (35, 36) gesteuert wird, dass die beiden Kolben (35, 36) von den Enden eines beweglichen, in seinem mittleren Bereich mit den Kraftbeaufschlagungsteilen in Eingriff stehenden Hebels (34) gesteuert werden, wobei die Kraftbeaufschlagung, der vom Piloten an die Betätigungsorgane (11, 12) gegebenen Belastungskraft entspricht.

7. Vorrichtung nach Anspruch 6, mit zwei den jeweiligen Betätigungsorganen (11, 12) zugeordneten Gebern (13, 14), dadurch gekennzeichnet, dass die Geber (13, 14) die mit dem mittleren Teil des beweglichen Hebels (34) in Eingriff stehenden Winden (28, 29) steuern.

8. Vorrichtung nach Anspruch 6, dadurch gekennzeichnet, dass die Winden (28, 29) und die Kolben (35, 36) der Druckregler (39, 40) zueinander parallel und zum Mittelteil des Hebels (34) symmetrisch angeordnet sind.

9. Vorrichtung nach Anspruch 8, dadurch gekennzeichnet, dass die Winden (28, 29) auf einer Seite des Hebels (34) angeordnet sind, während die beiden Druckregler (39, 40) auf dessen anderer Seite liegen.

10. Vorrichtung nach einem der Ansprüche 6 bis 9, dadurch gekennzeichnet, dass jeder Druckregler (39, 40) als Druckgegenkopplung arbeitet.

## Claims

1. Process for braking an aircraft taxiing on the ground and provided, on the one hand, with a landing gear comprising two spaced-apart undercarriages, disposed on either side of the longitudinal axis of said aircraft and each provided with at least one wheel (1 or 3) and braking means (2 or 4), and, on the other hand, with two members (11 and 12) actuatable by the pilot and associated respectively with the actuation of the means (2 and 4) for braking said undercarriages, in which process crossed links are established between each of said actuating members (11 and 12) and the means (2 and 4) for braking the undercarriage associated with the other of said members (11 and 12), characterized in that, when one of said members (11 or 12) is actuated, it causes, in addition to a direct braking action on the undercarriage with which it is associated, a crossed braking action of lesser magnitude on the undercarriage associated with the other member, via said crossed links.

2. The process of claim 1, characterized in that the crossed links are eliminated in the case of taxiing at low speed.

3. The process of claim 1, characterized in that the absolute and/or relative amplitudes of the direct and crossed braking actions depend on the taxiing speed.

4. Device for carrying out the process of claim 1, intended for braking an aircraft taxiing on the ground and provided, on the one hand, with a landing gear comprising two spaced-apart undercarriages, disposed on either side of the longitudinal axis of said aircraft and each provided with at least one wheel (1 or 3) and with braking means (2, 4), and, on the other hand, with two members (11, 12) actuatable by the pilot and respectively associated with the actuation of the means (2, 4) for braking said undercarriages, characterized in that said device comprises crossed links (16, 22, 20 and 15, 21, 18) between each of said actuating members (11, 12) and the means (2, 4) for braking the undercarriage associated with the other of said members, so that, when one of said members (11, 12) is actuated, the latter causes, in addition to a direct braking action ($K_1$) on the undercarriage with which it is associated, a crossed braking action ($K_2$), of lesser magnitude, on the undercarrige associated with the other member (11, 12).

5. The device of claim 4, characterized in that the brakes (2, 4) are actuated by a pressurized fluid under the control of electrovalves (9, 10) controlled by the electrical signals coming from two transmitters (13, 14) associated respectively with the actuating members (11, 12), characterized in that the output (15, 16) of each transmitter (13, 14) is connected, on the one hand, to the electrovalve (19, 10) of the associated undercarriage and, on the other hand, to the electrovalve (9, 10) of the undercarriage associated with the other transmitter, the amplification gain of the signal from the transmitter being greater in the first link ($K_1$) than in the second ($K_2$).

6. The device of claim 4, in which the brakes (2, 4) are actuated by a pressurized fluid, characterized in that a pressure reducing valve (39, 40) is interposed in each conduit supplying fluid to the means (2, 4) for braking an undercarriage, said valve being controlled by a piston (35, 36), and that the two pistons (35, 36) are controlled by the ends of a mobile lever (34), engaged in its central part with elements (32, 33) for applying efforts representative of the efforts applied by the pilot on said actuating members (11, 12).

7. The device of claim 6, in which two transmitters (13, 14) are provided, respectively associated with the actuating members (11, 12), characterized in that said transmitters (13, 14) control jacks (28, 29) engaged with the central part of said mobile lever (34).

8. The device of claim 6, characterized in that said jacks (28, 29) and said pistons (35, 36) of the pressure reducing valves (39, 40) are parallel to one another and disposed symmetrically with respect to the centre of said lever (34).

9. The device of claim 8, characterized in that the two jacks (28, 29) are disposed on one side of the lever (34), whilst the two pressure reducing valves (39, 40) are disposed on the other side thereof.

10. The device of one of claims 6 to 9, characterized in that each pressure reducing valve (39, 40) is of the type with negative feedback of pressure.

## Fig. 1

Fig. 2

0 036 349